# EUROPEAN PATENT APPLICATION

(11) **EP 4 786 553 A1**
(43) Date of publication of application: **05.08.2026**
(21) Application number: 24872231.6
(22) Date of filing: 25.09.2024
(51) Int. Cl.: C09D 201/00, B32B 27/20, C09D 5/00, C09D 5/33

(54) **HEAT-SHIELDING FILM, HEAT-SHIELDING COATING MATERIAL, AND COATED OBJECT**

(30) Priority: 26.09.2023 JP 2023162683; 18.09.2024 JP 2024160827
(71) Applicant: Canon Kabushiki Kaisha, Tokyo, 146-8501 (JP)
(72) Inventor: HASEGAWA, Waka, Tokyo 146-8501 (JP); INOUE, Kei, Tokyo 146-8501 (JP); KUBO, Wataru, Tokyo 146-8501 (JP); OKUDA, Masahiro, Tokyo 146-8501 (JP); KASHIWAZAKI, Akio, Tokyo 146-8501 (JP); SAITO, Hiroshi, Tokyo 146-8501 (JP); KUBOTA, Makoto, Tokyo 146-8501 (JP); TAYA, Akihiro, Tokyo 146-8501 (JP)
(74) Representative: TBK
(86) International application number: PCT/JP2024/034056
(87) International publication number: WO 2025/070444

(57) **Abstract**

A heat-shielding film having a transmittance of 50% or more for light having a wavelength of 300 nm or more and 800 nm or less includes (i) particles and (ii) a resin component, in which one or both of the particles and the resin component have a refractive index exhibiting anomalous dispersion for light having a wavelength of 500 nm or more and 1000 nm or less, and a difference in refractive index between the particles and the resin component for light having a wavelength of 500 nm is smaller than a difference in refractive index between the particles and the resin component for light having a wavelength of 1000 nm.

## Description

### Technical Field

The present invention relates to a heat-shielding film, a heat-shielding coating, and a coated article.

### Background Art

Heat-shielding films are films that, when used outdoors, function to inhibit the temperature rise of a member caused by sunlight. They can exhibit their heat-shielding performance because they absorb or reflect the infrared light contained in sunlight.

Among these, heat-shielding films that reflect infrared light are particularly preferred because they exhibit higher heat-shielding performance. Heat-shielding films that reflect infrared light contain materials that reflect infrared light. Examples of materials that reflect infrared light include titanium dioxide, calcium carbonate, and zinc oxide. For example, Patent Literature 1 proposes that a heat-shielding coating used to form a heat-shielding coating film contains titanium dioxide having a specific median diameter.

There is also strong demand for improving the visible-light transparency of heat-shielding films. For example,

Patent Literature 2 proposes a high-transparency film material in the form of a multilayer structure that includes a heat-shielding resin layer and one or more heat-retention resin layers, and that has an overall visible-light transmittance of 10% to 50%.

### Citation List

### Patent Literature

PTL 1: Japanese Patent Laid-Open No. 2013-147571
PTL 2: Japanese Patent Laid-Open No. 2016-16545

### Summary of Invention

### Technical Problem

Although further improvement is desired in the visible-light transparency of heat-shielding films, the heat-shielding performance and visible-light transparency of such films are often in a trade-off relationship, and it has been difficult to achieve both the heat-shielding performance and the visible-light transparency of heat-shielding films. For example, in order to increase the visible-light transparency of a heat-shielding film, reducing the content of titanium dioxide, which is an infrared-reflective material contained in the heat-shielding film, results in less infrared light being reflected, thereby lowering the heat-shielding performance.

Accordingly, an object of the present invention is to provide a heat-shielding film that exhibits both good visible-light transparency and good heat-shielding performance. Another object of the present invention is to provide a heat-shielding coating used to form the heat-shielding film, and a coated article having the heat-shielding film.

### Solution to Problem

That is, according to one aspect of the present invention, there is provided a heat-shielding film having a transmittance of 50% or more for light having a wavelength of 300 nm or more and 800 nm or less, the heat-shielding film including:
(i) particles and (ii) a resin component,
in which one or both of the particles and the resin component have a refractive index exhibiting anomalous dispersion for light having a wavelength of 500 nm or more and 1000 nm or less, and
a difference in refractive index between the particles and the resin component for light having a wavelength of 500 nm is smaller than a difference in refractive index between the particles and the resin component for light having a wavelength of 1000 nm.

According to another aspect of the present invention, there is provided a heat-shielding film having:
a transmittance of 50% or more for light having a wavelength of 300 nm or more and 800 nm or less,
a transmittance of 70% or more for light having a wavelength of 500 nm, and
a reflectance of 30% or more for light having a wavelength of 1000 nm.

### Advantageous Effects of Invention

According to the present invention, it is possible to provide a heat-shielding film that has high visible-light transparency as well as high heat-shielding performance. In addition, according to the present invention, it is possible to provide a heat-shielding coating used for forming this heat-shielding film, and a coated article including the heat-shielding film.

### Description of Embodiments

The present invention will be described in further detail below with reference to preferred embodiments. In the present invention, the term "refractive index exhibiting anomalous dispersion" indicates a refractive index such that, in the relationship between the refractive index and the wavelength, the refractive index on the long-wavelength side (infrared-light region) is greater than the refractive index on the short-wavelength side (visible-light region). In contrast, the term "refractive index exhibiting normal dispersion" indicates a refractive index that decreases as the wavelength increases. In the present specification, "having a refractive index exhibiting anomalous dispersion for light having a wavelength of 500 nm or more and 1000 nm or less" may sometimes be simply referred to as "having a refractive index exhibiting anomalous dispersion".

The inventors have conducted intensive studies in order to solve the above problems and have found that, in order to control reflection of light at the surfaces of particles contained in the heat-shielding film, it is important to adjust the difference in refractive index between the particles contained in the heat-shielding film and a resin component present around the particles. These findings have led to the completion of the present invention.

In a first aspect of the present invention, the transmittance of the heat-shielding film for light having a wavelength of 300 nm or more and 800 nm or less is 50% or more, and a relationship of differences in refractive index at specific wavelengths of light between particles and a resin component contained in the heat-shielding film is defined. Specifically, the difference in refractive index between the particles and the resin component at a wavelength of 500 nm is adjusted to be smaller than the difference in refractive index between the particles and the resin component at a wavelength of 1000 nm. In this way, for light having a wavelength of 1000 nm, at which the light energy is particularly strong in the infrared-light region of solar light, the difference in refractive index between the particles and the resin component contained in the heat-shielding film is large, so that the light is likely to be reflected. For light having a wavelength of 500 nm, at which the light energy is particularly strong in the visible-light region of solar light, the difference in refractive index between the particles and the resin component contained in the heat-shielding film is small, so that the light is unlikely to be reflected. Thus, reflection of light is controlled in accordance with wavelength, thereby making it possible to achieve both good visible-light transparency and good high heat-shielding performance. Furthermore, in order to provide a heat-shielding film having such light reflection characteristics, the inventors have found that it is important that one or both of the particles and the resin component contained in the heat-shielding film have a refractive index exhibiting anomalous dispersion for light having a wavelength of 500 nm or more and 1000 nm or less. This allows the difference in refractive index between the particles and the resin component in the visible-light region to be made smaller than the difference in refractive index in the infrared-light region, making it possible to achieve both good visible-light transparency and good heat-shielding performance. Here, the difference in refractive index between the particles and the resin component at a wavelength of 500 nm is preferably 0 or more and 0.10 or less. The difference in refractive index between the resin and the resin component at a wavelength of 1000 nm is preferably 0.20 or more.

In a second aspect of the present invention, the heat-shielding film has a transmittance of 50% or more for light having a wavelength of 300 nm or more and 800 nm or less, a transmittance of 70% or more for light having a wavelength of 500 nm, and a reflectance of 30% or more for light having a wavelength of 1000 nm. Such a heat-shielding film allows light with a wavelength of 500 nm, where the energy of visible light is particularly strong in sunlight, to pass through easily, while it reflects light with a wavelength of 1000 nm, where the energy of infrared light is particularly strong in sunlight. As a result, it is possible to provide a heat-shielding film that can achieve both good visible-light transparency and good heat-shielding performance.

### <First Embodiment>

A heat-shielding film, a coating, and a coated article according to the first aspect will be described below. However, the present invention is not limited to the following embodiments.

### [Heat-Shielding Film]

The heat-shielding film according to a first embodiment has a transmittance of 50% or more for light having a wavelength of 300 nm or more and 800 nm or less. Thus, since light in the visible-light region having a wavelength of 300 nm or more and 800 nm or less can be transmitted, the heat-shielding film can have high visible-light transparency. In order to achieve higher visible-light transparency, the heat-shielding film preferably has a transmittance of 60% or more, more preferably 70% or more, for light having a wavelength of 300 nm or more and 800 nm or less. The upper limit of the transmittance for light having a wavelength of 300 nm or more and 800 nm or less is not particularly limited, but is preferably, for example, 100% or less.

The heat-shielding film contains (i) particles and (ii) a resin component. One or both of the particles and the resin component have a refractive index exhibiting anomalous dispersion for light having a wavelength of 500 nm or more and 1000 nm or less. There is no particular limitation on a method for imparting a refractive index exhibiting anomalous dispersion for light having a wavelength of 500 nm or more and 1000 nm or less to the particles and the resin component. The particles or the resin component having a refractive index exhibiting anomalous dispersion for light having a wavelength of 500 nm or more and 1000 nm or less preferably has a refractive index of 1.60 or more and 2.10 or less at a wavelength of 500 nm, and a refractive index of 1.50 or more and 1.70 or less at a wavelength of 1000 nm. The difference between the refractive index at a wavelength of 500 nm and the refractive index at a wavelength of 1000 nm of the particles or the resin component having a refractive index exhibiting anomalous dispersion for light having a wavelength of 500 nm or more and 1000 nm or less is preferably 0.10 or more. The upper limit of this difference in refractive index is not particularly limited, but may be, for example, 0.50 or less.

The thickness of the heat-shielding film is preferably 1 µm or more, more preferably 5 µm or more, from the viewpoint of heat-shielding performance. From the viewpoint of visible-light transparency, the thickness is preferably 1000 µm or less, more preferably 200 µm or less.

### (Particles)

The particles are not particularly limited as long as they can be adjusted so that the heat-shielding film has a transmittance of 50% or more for light having a wavelength of 300 nm or more and 800 nm or less. Examples of the particles include calcium carbonate, alumina, zinc oxide, acid value yttrium (Y₂O₃), and diamond. In order to efficiently reflect infrared light, the particles are preferably dispersed in the resin component. From the viewpoint of achieving both good heat-shielding performance and good visible-light transparency, the average particle diameter of the particles is preferably 0.2 µm or more and 5.0 µm or less, more preferably 0.3 µm or more and 5.0 µm or less, and still more preferably 1.0 µm or more and 5.0 µm or less. The average particle diameter of the particles refers to a volume-based cumulative 50% particle diameter (D₅₀). The "volume-based cumulative 50% particle diameter (D₅₀)" indicates a particle diameter at which, in a cumulative particle size distribution curve, the cumulative volume from the smaller particle diameter side reaches 50% with respect to the total volume of the measured particles, and can be measured using a particle size distribution measuring apparatus employing a dynamic light scattering method. The measurement conditions may be, for example, SetZero: 30 seconds, number of measurements: 3, measurement time: 180 seconds, shape: non-spherical, and refractive index: 2.60. As the particle size distribution measuring apparatus, a particle size analyzer employing a dynamic light scattering method (for example, trade name "UPA-EX150", manufactured by Nikkiso Co., Ltd.) can be used. Of course, the particle size distribution measuring apparatus and the measurement conditions to be used are not limited to those described above. From the viewpoint of visible-light transparency, the refractive index of the particles at a wavelength of 500 nm is preferably 1.60 or more and 2.00 or less. The particles may contain an anomalous dispersion material described in the section of the resin component below so as to have a refractive index exhibiting anomalous dispersion.

### (Resin Component)

The resin component is not particularly limited as long as it can be adjusted so that the heat-shielding film has a transmittance of 50% or more for light having a wavelength of 300 nm or more and 800 nm or less. In the present embodiment, when the resin component does not have a refractive index exhibiting anomalous dispersion, the resin component is made of a resin that does not have a refractive index exhibiting anomalous dispersion. When the resin component has a refractive index exhibiting anomalous dispersion, the resin component is made of a resin having a refractive index exhibiting anomalous dispersion, or of a resin and an anomalous dispersion material having a refractive index exhibiting anomalous dispersion.

Examples of the resin include polystyrene, polyethylene, polypropylene, polyester, and polycarbonate. When a resin having a refractive index exhibiting anomalous dispersion for light having a wavelength of 500 nm or more and 1000 nm or less is used as the resin, the resin preferably has a peak in a wavelength range of 300 nm or more and 500 nm or less in a spectral absorption spectrum, more preferably has a peak in a wavelength region of 300 nm or more and 400 nm or less. In order for the resin to have a refractive index exhibiting anomalous dispersion, the resin preferably has a unit having a benzotriazole skeleton, a unit having a triazine skeleton, or a unit having a benzophenone skeleton.

From the viewpoint of ease of adjustment of the refractive index exhibiting anomalous dispersion, the resin component preferably contains a resin and an anomalous dispersion material having a refractive index exhibiting anomalous dispersion for light having a wavelength of 500 nm or more and 1000 nm or less. As the resin contained in this resin component, the resins listed in the above section (Resin) can be used. However, since control of the refractive index can be performed by the anomalous dispersion material, a resin that does not have a refractive index exhibiting anomalous dispersion for light having a wavelength of 500 nm or more and 1000 nm or less is preferably used.

The anomalous dispersion material preferably has a peak in a wavelength region of 300 nm or more and 500 nm or less in a spectral absorption spectrum, and more preferably has a peak in a wavelength range of 300 nm or more and 400 nm or less. Examples of the anomalous dispersion material include organic compounds having an aromatic group or a heterocyclic group. Examples of products that can be used as the anomalous dispersion material include ultraviolet absorbers, such as Adk Stab LA-24, Adk Stab LA-29, and Adk Stab LA-F70, manufactured by ADEKA Corporation, and yellow dyes, such as Solvent Yellow 162 (SY162). Examples of the anomalous dispersion material also include inorganic particles, such as titanium oxide, iron oxide, composite particles of iron oxide and silica, and composite particles of iron oxide and alumina. An example of the composite particles of iron oxide and silica is H-type magadiite containing molecular iron oxide as described in Japanese Patent Laid-Open No. 2022-33391. Among these, the anomalous dispersion material is preferably at least one selected from the group consisting of iron oxide, composite particles of iron oxide and silica, and composite particles of iron oxide and alumina. When the anomalous dispersion material is inorganic particles, the average particle diameter of the inorganic particles is preferably 10 nm or more and 200 nm or less, more preferably 40 nm or more and 100 nm or less. The average particle diameter of the inorganic particles of this anomalous dispersion material refers to a volume-based cumulative 50% particle diameter (D₅₀). This "volume-based cumulative 50% particle diameter (D₅₀)" can be measured by the same method as described in the "Particles" section above.

When the resin component contains an anomalous dispersion material, the content of the anomalous dispersion material in the resin component is preferably 10% by volume or more and 70% by volume or less, based on the content of the resin in the resin composition. When the content of the anomalous dispersion material is within the above range, heat-shielding performance and visible-light transparency can be further improved.

### [Heat-Shielding Coating]

A heat-shielding coating according to the first embodiment is a heat-shielding coating used for forming a heat-shielding film having a transmittance of 50% or more for light having a wavelength of 300 nm or more and 800 nm or less, and contains (i) particles, (ii) a resin component, and (iii) an organic solvent. One or both of the particles and the resin component have a refractive index exhibiting anomalous dispersion for light having a wavelength of 500 nm or more and 1000 nm or less, and a difference in refractive index between the particles and the resin component for light having a wavelength of 500 nm is smaller than a difference in refractive index between the particles and the resin component for light having a wavelength of 1000 nm.

The particles and the resin component contained in the heat-shielding coating can be the same as those described above in the [Heat-Shielding Film] section, and therefore description thereof is omitted.

The organic solvent contained in the heat-shielding coating is not particularly limited as long as it can be used to mix the particles with the resin component. Examples of the organic solvent include toluene, xylene, methyl ethyl ketone, and ethyl acetate.

In addition to the above particles, resin component, and organic solvent, the heat-shielding coating may further contain a dispersant, a surfactant, and a viscosity modifier.

As a method for producing the heat-shielding coating, a known method can be used.

### [Coated Article]

A coated article according to the first embodiment is a coated article including a substrate and a heat-shielding film having a transmittance of 50% or more for light having a wavelength of 300 nm or more and 800 nm or less, and containing (i) particles and (ii) a resin component. In the heat-shielding film, one or both of the particles and the resin component have a refractive index exhibiting anomalous dispersion for light having a wavelength of 500 nm or more and 1000 nm or less, and a difference in refractive index between the particles and the resin component for light having a wavelength of 500 nm is smaller than a difference in refractive index between the particles and the resin component for light having a wavelength of 1000 nm.

The particles and the resin component contained in the coated article can be the same as those described above in the [Heat-Shielding Film] section, and therefore description thereof is omitted.

As the substrate, any material may be used as long as the heat-shielding film can be formed thereon, and examples thereof include automobiles, containers, window members, and films.

As a method for producing the coated article, any method can be used as long as the above heat-shielding coating can be applied to the substrate, and examples thereof include a spray coating method, a roll coating method, a spin coating method, and a die coating method.

### <Second Embodiment>

A heat-shielding film, a coating, and a coated article according to a second embodiment will be described below. However, the present invention is not limited to the embodiments described below.

### [Heat-Shielding Film]

The heat-shielding film according to the second embodiment has a transmittance of 50% or more for light having a wavelength of 300 nm or more and 800 nm or less, a transmittance of 70% or more for light having a wavelength of 500 nm, and a reflectance of 30% or more for light having a wavelength of 1000 nm. This makes it possible to achieve both good visible-light transparency and good heat-shielding performance.

The configuration of the heat-shielding film can be the same as that of the heat-shielding film in the first embodiment, and therefore description thereof is omitted.

### [Heat-Shielding Coating]

The heat-shielding coating according to the second embodiment is a heat-shielding coating used for forming a heat-shielding film having a transmittance of 50% or more for light having a wavelength of 300 nm or more and 800 nm or less, a transmittance of 70% or more for light having a wavelength of 500 nm, and a reflectance of 30% or more for light having a wavelength of 1000 nm.

The configuration and production method of the heat-shielding coating can be the same as those described above for the heat-shielding coating, and therefore description thereof is omitted.

### [Coated Article]

The coated article according to the second embodiment is a coated article having a substrate and a heat-shielding film, the heat-shielding film having a transmittance of 50% or more for light having a wavelength of 300 nm or more and 800 nm or less, a transmittance of 70% or more for light having a wavelength of 500 nm, and a reflectance of 30% or more for light having a wavelength of 1000 nm.

The configuration and production method of the coated article can be the same as those described above for the coated article according to the second embodiment, and therefore description thereof is omitted.

### EXAMPLES

While the present invention will be described in more detail with reference to examples and comparative examples, the present invention is not limited at all by the following examples as long as the gist of the present invention is not exceeded. Unless otherwise specified, quantities of components indicated by "part(s)" or "%" are based on mass. The product "DisperBYK 111" used in Examples 1 to 7 and Comparative Example 1 is a dispersant manufactured by BYK Japan K.K. The polystyrene used in Examples 1 to 5 and Comparative Example 1 is a polystyrene having an average molecular weight of 280,000, manufactured by Sigma-Aldrich Japan. The dye-incorporated polystyrene used in Examples 6 and 7 was produced by the method described below. The average particle diameters (volume-based cumulative 50% particle diameter (D₅₀)) of the particles and the anomalous dispersion material were measured using a particle size distribution measuring apparatus employing a dynamic light scattering method (product name "UPA-EX150", manufactured by Nikkiso Co., Ltd.).

### <Method for Producing Dye-Incorporated Polystyrene>

A dye-incorporated polystyrene having an azo skeleton unit represented by the following structure was produced according to the following scheme.

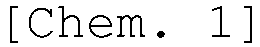

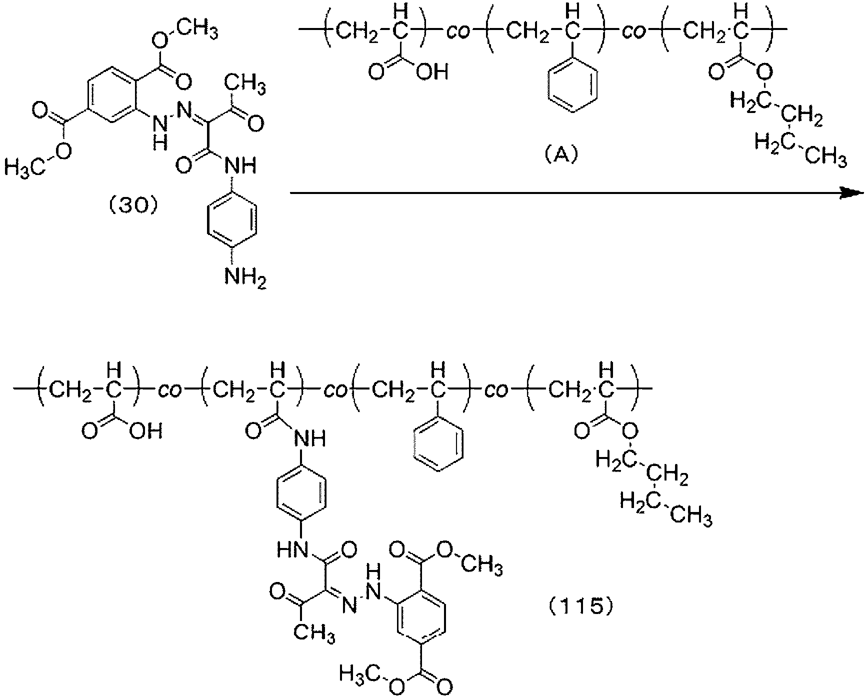

First, 100 parts of propylene glycol monomethyl ether was heated under a stream of nitrogen and refluxed at a liquid temperature of 120°C or higher. A mixture of 150 parts of styrene, 50 parts of acrylic acid, and 1.0 part of tert-butyl peroxybenzoate [an organic peroxide polymerization initiator, manufactured by NOF Corporation, trade name: Perbutyl Z] was added dropwise thereto over 3 hours. After completion of the dropwise addition, the solution was stirred for 3 hours, then distilled at atmospheric pressure while raising the liquid temperature to 170°C. After the liquid temperature reached 170°C, the solution was distilled under reduced pressure at 1 hPa for 1 hour to remove the solvent, thereby obtaining a resin solid. The solid was dissolved in tetrahydrofuran, reprecipitated in n-hexane, and the resulting precipitated solid was separated by filtration to obtain a polymer portion (A).

Next, 1.98 parts of compound (30) was added to 500 parts of tetrahydrofuran, and the mixture was heated to 80°C to dissolve the compound. After dissolution, the temperature was lowered to 50°C, 3 parts of the polymer portion (A) was added and dissolved, and 1.96 parts of 1-ethyl-3-(3-dimethylaminopropyl)carbodiimide hydrochloride (EDC·HCl) was added, followed by stirring at 50°C for 5 hours. Thereafter, the liquid temperature was gradually brought to room temperature, and the mixture was stirred overnight to complete the reaction. After completion of the reaction, the solution was filtered and concentrated, and then reprecipitated in methanol for purification, thereby obtaining compound (115), which is the dye-incorporated polystyrene. This dye-incorporated polystyrene was confirmed to have a refractive index exhibiting anomalous dispersion for light having a wavelength of 500 nm or more and 1000 nm or less.

### (Example 1)

· Resin component
   · Resin: polystyrene 5.3 parts
   · Anomalous dispersion material: SY162 3.5 parts
· Particles: Y₂O₃ (average particle diameter: 1000 nm) 11 parts

These components were dispersed in methyl ethyl ketone, which is an organic solvent, together with 1.1 parts of DisperBYK 111 serving as a dispersant and glass beads having a diameter of 1 mm, using a paint shaker, to obtain heat-shielding coating 1.

Heat-shielding coating 1 was applied onto a PET film serving as a substrate with a bar coater so that the thickness of the heat-shielding film was 100 µm, thereby obtaining coated article 1 including a heat-shielding film.

### (Example 2)

· Resin component
   · Resin: polystyrene 5.3 parts
   · Anomalous dispersion material: SY162 3.5 parts
· Particles: Y₂O₃ (average particle diameter: 200 nm) 11 parts

These components were dispersed in methyl ethyl ketone, which is an organic solvent, together with 1.1 parts of DisperBYK 111 serving as a dispersant and glass beads having a diameter of 1 mm, using a paint shaker, to obtain heat-shielding coating 2.

Heat-shielding coating 2 was applied onto a PET film serving as a substrate with a bar coater so that the thickness of the heat-shielding film was 100 µm, thereby obtaining coated article 2 including a heat-shielding film.

### (Example 3)

· Resin component
   · Resin: polystyrene 1.2 parts
   · Anomalous dispersion material: iron oxide (average particle diameter: 80 nm) 7.9 parts
· Particles: diamond (average particle diameter: 1000 nm ) 0.87 parts

These components were dispersed in methyl ethyl ketone, which is an organic solvent, together with 1.1 parts of DisperBYK 111 serving as a dispersant and glass beads having a diameter of 1 mm, using a paint shaker, to prepare heat-shielding coating 3.

Heat-shielding coating 3 was applied onto a PET film serving as a substrate with a bar coater so that the thickness of the heat-shielding film was 100 µm, thereby obtaining coated article 3 including a heat-shielding film.

### (Example 4)

· Resin component
   · Resin: polystyrene 1.2 parts
   · Anomalous dispersion material: iron oxide (average particle diameter: 120 nm) 7.9 parts
· Particles: diamond (average particle diameter: 1000 nm ) 0.87 parts

These components were dispersed in methyl ethyl ketone, which is an organic solvent, together with 1.1 parts of DisperBYK 111 serving as a dispersant and glass beads having a diameter of 1 mm, using a paint shaker, to prepare heat-shielding coating 4.

Heat-shielding coating 4 was applied onto a PET film serving as a substrate with a bar coater so that the thickness of the heat-shielding film was 100 µm, thereby obtaining coated article 4 including a heat-shielding film.

### (Example 5)

· Resin component
   · Resin: polystyrene 1.2 parts
   · Anomalous dispersion material: iron oxide (average particle diameter: 80 nm) 7.9 parts
· Particles: diamond (average particle diameter: 200 nm ) 0.87 parts

These components were dispersed in methyl ethyl ketone, which is an organic solvent, together with 1.1 parts of DisperBYK 111 serving as a dispersant and glass beads having a diameter of 1 mm, using a paint shaker, to prepare heat-shielding coating 5.

Heat-shielding coating 5 was applied onto a PET film serving as a substrate with a bar coater so that the thickness of the heat-shielding film was 100 µm, thereby obtaining coated article 5 including a heat-shielding film.

### (Example 6)

· Resin component
   · Resin: dye-incorporated polystyrene 8.8 parts
· Particles: Y₂O₃ (average particle diameter: 1000 nm) 11 parts

These components were dispersed in methyl ethyl ketone, which is an organic solvent, together with 1.1 parts of DisperBYK 111 serving as a dispersant and glass beads having a diameter of 1 mm, using a paint shaker, to prepare heat-shielding coating 6.

Heat-shielding coating 6 was applied onto a PET film serving as a substrate with a bar coater so that the thickness of the heat-shielding film was 100 µm, thereby obtaining coated article 6 including a heat-shielding film.

### (Example 7)

· Resin component
   · Resin: dye-incorporated polystyrene 8.8 parts
· Particles: Y₂O₃ (average particle diameter: 200 nm) 11 parts

These components were dispersed in methyl ethyl ketone, which is an organic solvent, together with 1.1 parts of DisperBYK 111 serving as a dispersant and glass beads having a diameter of 1 mm, using a paint shaker, to prepare heat-shielding coating 7.

Heat-shielding coating 7 was applied onto a PET film serving as a substrate with a bar coater so that the thickness of the heat-shielding film was 100 µm, thereby obtaining coated article 7 including a heat-shielding film.

### (Comparative Example 1)

Heat-shielding coating 8 was prepared in the same manner as in Example 1, except that SY162, which is an anomalous dispersion material, was excluded.

Heat-shielding coating 8 was applied onto a PET film serving as a substrate with a bar coater so that the thickness of the heat-shielding film was 100 µm, thereby obtaining coated article 8 including a heat-shielding film.

The difference in refractive index between the particles and the resin component, used in each of heat-shielding coatings 1 to 7, at a wavelength of 500 nm was 0 or more and 0.10 or less, and the difference in refractive index at a wavelength of 1000 nm was 0.20 or more. In contrast, the difference in refractive index between the particles and the resin component, used in heat-shielding coating 8, at a wavelength of 500 nm was more than 0.10, and the difference in refractive index at a wavelength of 1000 nm was 0.20 or more.

The resin components, used in heat-shielding coatings 1 to 7, having a refractive index exhibiting anomalous dispersion for light having a wavelength of 500 nm or more and 1000 nm or less had a refractive index of 1.60 or more and 2.10 or less at a wavelength of 500 nm, and a refractive index of 1.50 or more and 1.70 or less at a wavelength of 1000 nm. In contrast, neither the particles nor the resin component used in heat-shielding coating 8 had a refractive index exhibiting anomalous dispersion.

The refractive index of the particles used in each of heat-shielding coatings 1 to 8 was 1.60 or more and 2.00 or less at a wavelength of 500 nm.

### <Evaluation>

For coated articles 1 to 8 obtained as described above, the transmittance for light having a wavelength of 500 nm and the reflectance for light having a wavelength of 1000 nm were measured using a spectrophotometer, and evaluated according to the following criteria.

### (Transmittance for light having a wavelength of 500 nm)

A: transmittance of 80% or more and 100% or less
B: transmittance of 70% or more and less than 80%
C: transmittance of 0% or more and less than 70%

### (Reflectance for light having a wavelength of 1000 nm)

A: reflectance of 50% or more and 100% or less
B: reflectance of 30% or more and less than 50%
C: reflectance of 0% or more and less than 30%

**[Table 1]**

| | Resin | Particles | | Anomalous dispersion material | | Organic solvent | Evaluation | |
|---|---|---|---|---|---|---|---|---|
| | | Material | Average particle diameter | Material | Average particle diameter | | Transmittance | Reflectance |
| Example 1 | polystyrene | Y₂O₃ | 1000 nm | SY162 | - | methyl ethyl ketone | A | A |
| Example 2 | polystyrene | Y₂O₃ | 200 nm | SY162 | - | methyl ethyl ketone | A | B |
| Example 3 | polystyrene | diamond | 1000 nm | Fe₂O₃ | 80 nm | methyl ethyl ketone | A | A |
| Example 4 | polystyrene | diamond | 1000 nm | Fe₂O₃ | 120 nm | methyl ethyl ketone | B | A |
| Example 5 | polystyrene | diamond | 200 nm | Fe₂O₃ | 80 nm | methyl ethyl ketone | A | B |
| Example 6 | dye-incorporated polystyrene | Y₂O₃ | 1000 nm | - | - | methyl ethyl ketone | A | A |
| Example 7 | dye-incorporated polystyrene | Y₂O₃ | 200 nm | - | - | methyl ethyl ketone | A | B |
| Comparative Example 1 | polystyrene | Y₂O₃ | 1000 nm | - | - | methyl ethyl ketone | C | A |

The present invention is not limited to the above embodiments and various changes and modifications can be made within the spirit and scope of the present invention. Therefore, to apprise the public of the scope of the present invention, the following claims are made.

This application claims priority to Japanese Patent Application No. 2023-162683 filed September 26, 2023 and No. 2024-160827 filed September 18, 2024, which are hereby incorporated by reference herein in their entirety.

## Claims

1. A heat-shielding film having a transmittance of 50% or more for light having a wavelength of 300 nm or more and 800 nm or less, the heat-shielding film comprising:
(i) particles, and (ii) a resin component,
wherein one or both of the particles and the resin component have a refractive index exhibiting anomalous dispersion for light having a wavelength of 500 nm or more and 1000 nm or less, and
wherein a difference in refractive index between the particles and the resin component for light having a wavelength of 500 nm is smaller than a difference in refractive index between the particles and the resin component for light having a wavelength of 1000 nm.

2. The heat-shielding film according to claim 1, wherein the difference in refractive index between the particles and the resin component for light having a wavelength of 500 nm is 0 or more and 0.10 or less, and the difference in refractive index between the particles and the resin component for light having a wavelength of 1000 nm is 0.20 or more.

3. The heat-shielding film according to claim 1 or 2, wherein the particles have an average particle diameter of 0.3 µm or more and 5.0 µm or less.

4. The heat-shielding film according to any one of claims 1 to 3, wherein the heat-shielding film has a thickness of 1 µm or more.

5. The heat-shielding film according to any one of claims 1 to 4, wherein the heat-shielding film has a transmittance of 70% or more for light having a wavelength of 300 nm or more and 800 nm or less.

6. The heat-shielding film according to any one of claims 1 to 5, wherein the particles have a refractive index exhibiting anomalous dispersion for light having a wavelength of 500 nm or more and 1000 nm or less.

7. The heat-shielding film according to any one of claims 1 to 6, wherein the resin component contains a resin having a refractive index exhibiting anomalous dispersion for light having a wavelength of 500 nm or more and 1000 nm or less.

8. The heat-shielding film according to claim 7, wherein the resin having a refractive index exhibiting anomalous dispersion for light having a wavelength of 500 nm or more and 1000 nm or less has a peak in a wavelength range of 300 nm or more and 500 nm or less in a spectral absorption spectrum.

9. The heat-shielding film according to any one of claims 1 to 8, wherein the resin component contains a resin and an anomalous dispersion material having a refractive index exhibiting anomalous dispersion for light having a wavelength of 500 nm or more and 1000 nm or less.

10. The heat-shielding film according to any one of claims 1 to 9, wherein the particles or the resin component having a refractive index exhibiting anomalous dispersion for light having a wavelength of 500 nm or more and 1000 nm or less has a refractive index of 1.60 or more and 2.10 or less at a wavelength of 500 nm and a refractive index of 1.50 or more and 1.70 or less at a wavelength of 1000 nm.

11. The heat-shielding film according to any one of claims 1 to 10, wherein the particles have a refractive index of 1.60 or more and 2.00 or less at a wavelength of 500 nm.

12. A heat-shielding coating used for forming a heat-shielding film having a transmittance of 50% or more for light having a wavelength of 300 nm or more and 800 nm or less, the heat-shielding coating comprising:
(i) particles, (ii) a resin component, and (iii) an organic solvent,
wherein one or both of the particles and the resin component have a refractive index exhibiting anomalous dispersion for light having a wavelength of 500 nm or more and 1000 nm or less, and
wherein a difference in refractive index between the particles and the resin component for light having a wavelength of 500 nm is smaller than a difference in refractive index between the particles and the resin component for light having a wavelength of 1000 nm.

13. A coated article comprising a substrate and a heat-shielding film having a transmittance of 50% or more for light having a wavelength of 300 nm or more and 800 nm or less, the coated article including:
(i) particles, and (ii) a resin component,
wherein in the heat-shielding film, one or both of the particles and the resin component have a refractive index exhibiting anomalous dispersion for light having a wavelength of 500 nm or more and 1000 nm or less, and
a difference in refractive index between the particles and the resin component for light having a wavelength of 500 nm is smaller than a difference in refractive index between the particles and the resin component for light having a wavelength of 1000 nm.

14. A heat-shielding film having:
a transmittance of 50% or more for light having a wavelength of 300 nm or more and 800 nm or less,
a transmittance of 70% or more for light having a wavelength of 500 nm, and
a reflectance of 30% or more for light having a wavelength of 1000 nm.

15. A heat-shielding coating used for forming a heat-shielding film,
the heat-shielding film having:
a transmittance of 50% or more for light having a wavelength of 300 nm or more and 800 nm or less,
a transmittance of 70% or more for light having a wavelength of 500 nm, and
a reflectance of 30% or more for light having a wavelength of 1000 nm.

16. A coated article comprising a substrate and a heat-shielding film,
the heat-shielding film having:
a transmittance of 50% or more for light having a wavelength of 300 nm or more and 800 nm or less,
a transmittance of 70% or more for light having a wavelength of 500 nm, and
a reflectance of 30% or more for light having a wavelength of 1000 nm.
